Europäisches Patentamt

European Patent Office

Office européen des brevets

(11) Numéro de publication: **0 464 571 A1**

## DEMANDE DE BREVET EUROPEEN

(21) Numéro de dépôt: **91110398.4**

(22) Date de dépôt: **24.06.91**

(51) Int. Cl.5: **F04B 49/10**, F04B 37/14, F04B 49/06, G05B 19/04

(30) Priorité: **26.06.90 FR 9008018**

(43) Date de publication de la demande:
**08.01.92 Bulletin 92/02**

(84) Etats contractants désignés:
**AT BE CH DE DK ES FR GB GR IT LI LU NL SE**

(71) Demandeur: **ALCATEL CIT**
**12 Rue de la Baume**
**F-75008 Paris(FR)**

(72) Inventeur: **Pierrejean, Didier**
**Le Beau Site, Route du Col de Leschaux**
**F-74320 Sevrier(FR)**
Inventeur: **Perrillat-Amede, Denis**
**31, avenue des Carrés**
**F-74940 Annecy le Vieux(FR)**

(74) Mandataire: **Weinmiller, Jürgen et al**
**Lennéstrasse 9 Postfach 24**
**W-8133 Feldafing(DE)**

(54) **Dispositif permettant d'assurer une gestion sure d'une pompe à vide.**

(57) Pompe à vide (1) destinée à être associée, par une liaison (2) amovible, à une alimentation électrique (3) pour l'alimentation du moteur d'entraînement de la pompe, caractérisée en ce qu'une mémoire (6), du type à sauvegarde automatique des informations en cas de rupture d'alimentation de la mémoire, est liée solidairement à la pompe (1) elle-même, ladite mémoire (6) étant gérée par l'alimentation électrique (3) qui inclut les organes nécessaires à la gestion de la mémoire.

EP 0 464 571 A1

Une pompe à vide telle qu'une pompe à vide secondaire est toujours associée à un convertisseur pour l'alimentation du moteur d'entraînement de la pompe. Ce convertisseur est relié à la pompe par un câble.

Il est connu que le convertisseur possède sur sa face un compteur électromécanique dont le but est d'indiquer à l'utilisateur le temps de fonctionnement depuis la dernière opération de maintenance. Ainsi, connaissant la pompe utilisée, ses conditions de fonctionnement (type de gaz pompé, température de la pompe, et....) et grâce à des abaques, l'opérateur peut alors connaître le temps qui le sépare de la prochaine maintenance (regraissage, changement des roulements, etc...). Le compteur ne progresse que lorsque la pompe est entraînée en rotation par le moteur, c'est-à-dire lorsque l'étage de puissance du convertisseur est en fonctionnement.

Un inconvénient du système provient de ce que si le convertisseur est dissocié de la pompe pour être relié à une autre pompe, l'information ne vaut plus rien pour cette nouvelle pompe et de même pour la première pompe antérieurement reliée au convertisseur, il faut noter l'information pour pouvoir l'ajouter à l'indication donnée par un nouveau convertisseur éventuellement relié à la première pompe.

L'invention a pour but de pallier cet inconvénient et a pour objet une pompe à vide destinée à être associée, par une liaison amovible, à une alimentation électrique pour l'alimentation du moteur d'entraînement de la pompe, caractérisée en ce qu'une mémoire, du type à sauvegarde automatique en cas de rupture d'alimentation de la mémoire, est liée solidairement à la pompe elle-même, ladite mémoire étant gérée par l'alimentation électrique qui inclut les organes nécessaires à la gestion de ladite mémoire.

Selon une autre caractéristique, lesdits organes comprennent un micro-processeur, un clavier d'entrée et un écran de visualisation.

Selon une autre caractéristique, des capteurs de paramètres de fonctionnement de la pompe sont reliés à ladite mémoire.

L'invention a aussi pour objet un procédé de fonctionnement de la pompe, dans lequel le micro-processeur est programmé pour compter le temps de fonctionnement de la pompe dès que l'étage de puissance de l'alimentation électrique est en fonctionnement, ce temps de fonctionnement étant transféré à ladite mémoire à chaque arrêt dudit étage de puissance.

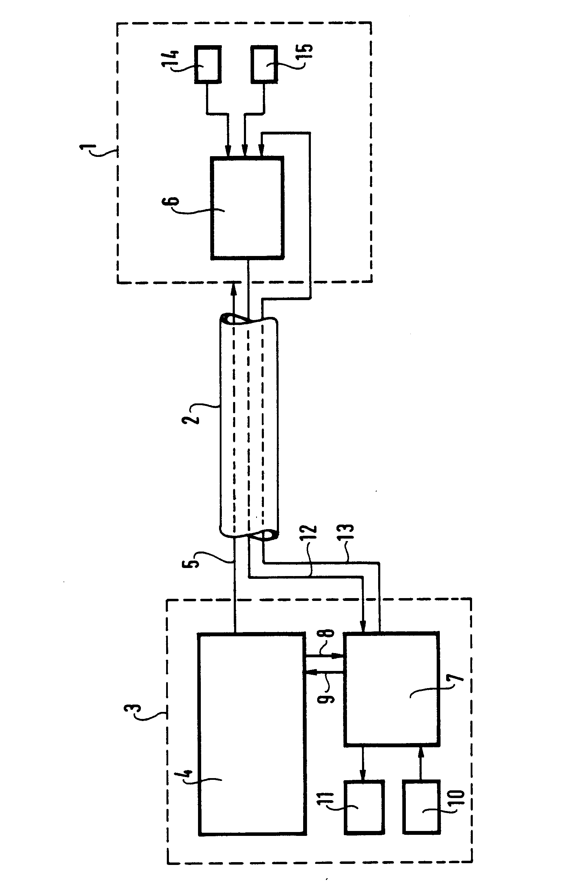

L'invention va maintenant être décrite en se référant au dessin joint qui comprend une figure unique représentant, sous forme de schémas blocs, la pompe selon l'invention avec son système de commande et de gestion.

Sur cette figure, la référence 1 désigne une pompe à vide telle que par exemple une pompe turbomoléculaire. La pompe 1 est reliée par un câble amovible 2 à une unité d'alimentation électrique 3 qui peut donc être déconnectée de la pompe 1.

Cette unité 3 comprend un convertisseur électrique 4 qui alimente le moteur d'entraînement de la pompe 1. La liaison d'alimentation est schématisée par le trait 5.

La pompe 1 comprend une mémoire 6 qui lui est solidairement liée. Cette mémoire 6 est du type à sauvegarde automatique en cas de rupture de son alimentation. Il s'agit par exemple d'une mémoire programmable et effaçable électriquement (EEPROM). Ainsi, la substitution d'une autre alimentation à l'unité 3 pour l'alimentation de la pompe 1 ne fait pas perdre les informations de la mémoire. Cette mémoire est gérée par l'unité 3 qui comprend un micro-processeur 7 relié dans les deux sens au convertisseur 4. Ces liaisons sont figurées par les flèches référencées 8 et 9. Un clavier 10 d'entrée de données est relié au micro-processeur 7. De même un écran de visualisation 11 est également relié un micro-processeur qui est lui-même en liaison bidirectionnelle 12, 13 avec la mémoire 6.

Enfin, des capteurs 14, 15 de paramètres de fonctionnement de la pompe sont reliés à la mémoire 6. Il s'agit par exemple de capteurs de température de paliers, vitesse de rotation, et...

Le clavier 10, permet d'introduire dans la mémoire des données statiques inhérentes à la pompe : son type, son numéro, sa date de mise en fonctionnement et... Elle permet également d'appeler sur l'écran 11 les données mémorisées dans la mémoire 6.

Les données évolutives sont fournies, soit par le convertisseur 4 par l'intermédiaire du micro-processeur 7, soit par les capteurs 14, 15 directement reliés à la mémoire 6.

Pour le temps de fonctionnement de la pompe, le micro-processeur 7 est programmé pour décompter ce temps à partir du moment où les circuits de puissance du convertisseur fonctionnent. Lorsque l'on arrête la pompe, c'est-à-dire lorsque ces circuits de puissance cessent de fonctionner, ce temps de fonctionnement est transféré dans la mémoire. Si un opérateur, pendant que la pompe fonctionne, appelle sur l'écran 11 le temps de fonctionnement de la pompe, il reçoit sur cet écran le temps total de fonctionnement de la pompe : temps de fonctionnement déjà mémorisé par la mémoire plus le temps de fonctionnement depuis le dernier démarrage, et en outre le temps de fonctionnement depuis le dernier démarrage uniquement.

On peut ainsi effectuer un suivi très sûr de la pompe puisque toutes ses caractéristiques aussi bien statiques que relatives à son fonctionnement sont mémorisées dans la mémoire 6 solidaire de la pompe elle-même et non pas dans l'unité 3.

## Revendications

1. Pompe à vide (1) destinée à être associée, par une liaison (2) amovible, à une alimentation électrique (3) pour l'alimentation du moteur d'entraînement de la pompe, caractérisée en ce qu'une mémoire (6), du type à sauvegarde automatique des informations en cas de rupture d'alimentation de la mémoire, est liée solidairement à la pompe (1) elle-même, ladite mémoire (6) étant gérée par l'alimentation électrique (3) qui inclut les organes nécessaires à la gestion de la mémoire.

2. Pompe à vide selon la revendication 1, caractérisée en ce que lesdits organes comprennent un micro-processeur (7), un clavier d'entrée (10) et un écran de visualisation (11).

3. Pompe à vide selon l'une des revendications 1 ou 2, caractérisée en ce que des capteurs (14, 15) de paramètres de fonctionnement de la pompe sont reliés à ladite mémoire (6).

4. Procédé de fonctionnement de la pompe à vide selon l'une des revendications 1 à 3, caractérisé par le fait que le micro-processeur (7) est programmé pour compter le temps de fonctionnement de la pompe (6) dès que l'étage de puissance de l'alimentation électrique (3) est en fonctionnement, ce temps de fonctionnement étant transféré à ladite mémoire (6) à chaque arrêt dudit étage de puissance.

Office européen
des brevets

**RAPPORT DE RECHERCHE
EUROPEENNE**

Numéro de la demande

**EP 91 11 0398**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN, vol. 14, no. 331 (M-999)[4274], 17 juillet 1990; & JP-A-02 112 681 (FUJI ELECTRIC CO.) 25-04-1990 * Le document en entier * | 1-3 | F 04 B 49/10 F 04 B 37/14 F 04 B 49/06 G 05 B 19/04 |
| | – – – | | |
| A | IDEM | 4 | |
| | – – – | | |
| Y | US-A-4 918 585 (MILLER) * Colonne 1, ligne 67 - colonne 4, ligne 42; figures 1-2B * | 1-3 | |
| A | | 4 | |
| | – – – | | |
| A | EP-A-0 332 607 (VOEST-ALPINE AUTOMOTIVE) * Colonne 3, ligne 13 - colonne 5, ligne 2; figure 1 * | 1 | |
| | – – – | | |
| A | US-A-4 584 654 (CRANE) * Colonne 3, ligne 66 - colonne 7, ligne 46; figures 1,2 * | 1-3 | |
| | – – – | | |
| A | PATENT ABSTRACTS OF JAPAN, vol. 13, no. 223 (M-829)[3571], 24 mai 1989; & JP-A-01 38 542 (MITSUBISHI ELECTRIC CO.) 08-02-1989 * Le document en entier * | 1,4 | **DOMAINES TECHNIQUES RECHERCHES (Int. Cl.5)** |
| | – – – | | |
| A | DE-A-3 213 155 (VIA) * Page 12, dernier alinéa - page 14, alinéa 5; page 18, dernier alinéa - page 19, alinéa 1; figures 1-3 * | 1-4 | F 04 B F 03 C F 04 C G 05 B |
| | – – – | | |
| A | FR-A-2 554 517 (PFEIFFER) * Page 6, ligne 11 - page 7, ligne 2; figure 1 * | 1 | |
| | – – – – – | | |

Le présent rapport de recherche a été établi pour toutes les revendications

| Lieu de la recherche | Date d'achèvement de la recherche | Examinateur |
|---|---|---|
| La Haye | 27 septembre 91 | BERTRAND G. |